# EUROPEAN PATENT SPECIFICATION

(11) **EP 3 034 555 B1**
(45) Date of publication and mention of the grant of the patent: **19.04.2017**
(21) Application number: 14197979.9
(22) Date of filing: 15.12.2014
(51) Int. Cl.: C03C 25/10, C08B 31/00, C08K 7/04, C08B 31/04, C08K 7/20, C04B 26/06, C04B 26/28, C03C 25/32, D04H 1/587, D04H 1/64, C08G 63/12, C09J 103/02, C08K 5/00, C08K 5/053, C08K 5/092, D04H 1/4209

(54) **CURABLE FORMALDEHYDE-FREE RESIN DISPERSION AND IMPROVED MINERAL WOOL PRODUCTS PRODUCED THEREWITH**
HÄRTBARE FORMALDEHYDFREIE HARZDISPERSION UND DAMIT HERGESTELLTE, VERBESSERTE MINERALWOLLEPRODUKTE
DISPERSION DE RÉSINE EXEMPTE DE FORMALDÉHYDE DURCISSABLE ET PRODUITS DE LAINE MINÉRALE AMÉLIORÉS FABRIQUÉS À PARTIR DE LADITE DISPERSION

(43) Date of publication of application: 22.06.2016
(73) Proprietor: URSA Insulation, S.A., 28004 Madrid (ES)
(72) Inventor: Casado Domínguez, Arturo Luís Dr., 28860 Paracuellos de Jarama (ES); Castro Cabado, María Mercedes, 28050 Madrid (ES)
(74) Representative: Zimmermann & Partner Patentanwälte mbB

(56) References cited:
- WO-A1-2008/053332
- WO-A1-2012/138723
- WO-A1-2013/057086
- WO-A1-2014/022666

## Description

### Field the invention

The present invention relates to curable resin dispersions, preferably formaldehyde-free, for the manufacture of improved mineral fiber products such as mineral wool insulating products. The curable resin comprises an aqueous dispersion of a) a water-insoluble native starch, b) a non-polymeric polycarboxylic compound of molecular weight ≤ 400 g/mol, and c) a polyol with a molecular weight < 1000 g/mol, preferably < 500 g/mol, and optionally further comprises an addition polymer from unsaturated carboxylic monomers in a concentration, if present, ≤ 1 wt.-% related to the sum of the weights of the components a), b) and c).

### Background

Mineral wool products are widely used for the thermal and acoustic insulation of different parts of buildings, transportations, or other appliances, as well as for fire protection. Mineral wool materials are mainly randomly interlaced masses of mineral fibers with varying lengths and usually bound by a resin-based binder. Three types of mineral materials are most commonly employed, glass, stone or slag. Mineral wool is formed by an intricate network of fibers which might be bonded in their cross-over points by different means, e.g. by using a cured binder. Processes for the production of mineral wool products are well known in the art, and usually comprise the steps of melting the mineral material to an adequate temperature, fiberizing the molten mixture into fine fibers, application (e.g. spraying) of a binder composition to the individual fibers, collection of the fibers and formation of a primary fleece on a foraminous conveyor, densifying the fleece, and curing the binder at elevated temperatures. The cured mat is then cut to the desired size with transverse and edge trimmers and optionally rolled up, before it is packaged for transport.

The type and amount of binder used to bond the fibers in the mineral wool plays an important role in the final properties of the produced mineral wool. A variety of binder systems have been described in the art, including binders based on melamine urea formaldehyde resins, furane-based resins, and others, but phenolformaldehyde resin based binders have been preferred for very long time, due to their good performance and attractive low cost.

Environmental and toxicological concerns related to the formaldehyde released from the products manufactured with phenolformaldehyde resin based binders have however led to a movement in the mineral wool industry to reduce or completely eliminate the use of such resins, or to reduce the amount of excess formaldehyde they contain.

In this regard, different formaldehyde-free resins have been described in the art, which are claimed to reduce formaldehyde emissions to zero. Some illustrative examples of these alternative resins are a) resins based on the esterification reaction between carboxylated polymers (e.g. acrylic copolymers) and low molecular weight polyfunctional alcohols, as those resins described in EP0583086B1 and US6071994A; b) resins using renewable carbohydrate materials reacted with a low molecular weight polyacid as a crosslinker, e.g. those described in US20100282996A1; and c) resins based on the Maillard reaction between a reducing sugar, and acid precursor and a source of nitrogen, as for example those described in WO200919232A.

Starch and its derivatives, due to their large availability at low cost, have also been explored as the renewable component for formaldehyde-free resin based binder compositions. Curable starch-based resins have exploited the fact that starch has a large number or hydroxyl-groups distributed along its polysaccharide chains which could potentially take part in curing reactions. For instance, these hydroxyl-groups have been targeted for crosslinking reactions of starch with carboxylic groups of organic polyacids. The suitable organic polyacids can be polymeric polycarboxylic acids (especially polyacrylic acid and its derivatives) and/or low molecular weight polycarboxylic acids (e.g. citric acid) as described in EP0911361B1 and US20090275699A1 and WO2008053332A1.

Native starch is a specific type of starch particularly interesting from the industrial perspective, due to its wide availability, reduced price, easy handling and long storage stability. Native starch does not require to be modified chemically, or by other means, in forehand to its use. A specific property that makes the use of native starch attractive for curable formaldehyde-free resins, which are to be used as base for binders for mineral wool products, is its higher resistance to degradation in humid conditions compared to the starch derivatives (e.g. dextrins) and other saccharides, what at the end translates in a better resistance to weathering influences and in a better ageing behavior of the bonded mineral wool products. This is due in part to the ultra-high molecular weight of native starch and its granular structure. However, native starch presents several drawbacks which have made difficult its use in this type of applications, like the low solubility in cold water or the instability of its dispersions, as well as the high viscosity of the solutions obtained after solubilization (e.g. after gelatinization, hydrolysis, etc.). As an additional downside, likely consequence of its highly packed granular structure, it has proved difficult to obtain efficient curing by crosslinking of compositions comprising insoluble native starch, due to the hindered access of crosslinking agents to the reactive groups in starch granules.

It has recently been described in application WO2014001518A1 that a curable binder composition comprising water insoluble native starch and a polycarboxylic polymer component can be prepared in form of dispersions in water. In embodiments, this binder might additionally include small molecular weight polyols. The so prepared binder compositions can be sprayed over the mineral fibers and cured for the manufacture of mineral wool products. However, this binder system has some limitations.

A particular weakness of these resins and binders is related to the relative high viscosity of the dispersions obtained. This viscosity is mostly due to the presence of the water soluble polycarboxylic polymer. In general, when using resins in binders for mineral wool, it is desired that their viscosity is as low as possible. The low viscosity, in addition to facilitate handling of the resin, e.g. by pumping, mixing, etc., it also has an effect in the properties of the mineral wool products obtained after curing. Thus, for instance, low viscosity enables better penetration of the sprayed binder into the forming felt of mineral fibers, and it assures the required homogeneity of the binder distribution onto the individual fibers and through the thickness of the mineral wool mat.

Even more importantly, a lower viscosity of the resin improves the distribution of the binder preferentially into the cross-over points between the fibers forming the mineral wool mat, what translates in better mechanical properties of the mineral wool product obtained after curing. When the individual fibers are coated with binder, e.g. by the spraying technique, these fibers are just being formed from a mineral melt by a fiberizer, and they are still warm. The remaining heat of the fibers produces a rapid evaporation of the water contained in the binder mixture, increasing its solid content, and thereby drastically increasing the viscosity of the binder composition on the fibers. Thus, in this situation, the higher the viscosity contribution of the resin, the lower the mobility of the binder towards the cross-over points between the fibers of the mat.

Because of the reasons explained above, the phenolformaldehyde resins broadly and successfully used in binders for the manufacture of mineral wool products favorably have a viscosity well below 50 mPa.s, usually below 20 mPa.s, when measured at a solid content of 45-55 wt.-%.

Regarding the resins in form of a dispersion described in the patent application WO2014001518A1, the viscosity of the dispersion is increased when the proportion of polycarboxylic polymer, e.g. acrylic resin, is increased, due to the fact that these polymers are usually water soluble high molecular weight compounds. On the other hand, when the relative content of polycarboxylic polymer is reduced, particularly below 45 wt.-%, e.g. to obtain a low viscosity, the mechanical bonding properties of the cured binder are detrimentally affected, especially if the products are aged. According to the teachings of WO2014001518A1, a certain amount of polycarboxylic polymer must necessarily be present in order to obtain mineral wool products with acceptable mechanical properties before and after ageing. As a consequence, in this resin system, a compromise has to be reached between the compositions giving lower viscosity and the compositions producing enhanced mechanical bonding properties.

From the above it is evident that there is still a need for curable formaldehyde-free resin compositions for the manufacture of mineral wool products, particularly binders which are based on resins in form of dispersions comprising water insoluble native starch, which overcome the limitations and downsides of this type of resins previously known in the art, and which optionally have a higher environmental sustainability and/or are more economical.

The inventors surprisingly found that very useful resins and binders in form of dispersions comprising water insoluble native starch can be obtained by the present invention, in absence or with a minimal concentration of an addition polymer from unsaturated carboxylic monomers. These resins and binders show an advantageous reduced viscosity and sufficient dispersion stability for their use in the manufacture of mineral wool products. The mineral wool products comprising the cured resins of the invention are characterized by unexpected significantly increased mechanical bonding properties, particularly after ageing in humid conditions.

### Description of the invention

In view of the above, the invention is directed to overcome the problems and limitations of previously known approaches and to develop a curable resin, preferably formaldehyde-free, according to the claims. The inventive resin shows reduced viscosity, improved mechanical bonding strength, and is very suitable for the preparation of a binder for the manufacture of mineral wool. The invention also concerns a method for the preparation of an improved curable resin and the improved mineral wool manufactured by using the resin of the invention.

In a first embodiment, it is provided a curable resin in the form of an aqueous dispersion, comprising, or alternatively consisting of, components a), b) and c), wherein a) is water-insoluble native starch, b) is non-polymeric polycarboxylic compound of molecular weight ≤ 400 g/mol, and c) is a polyol with a molecular weight < 1000 g/mol, preferably < 500 g/mol, and optionally further comprising an addition polymer from unsaturated carboxylic monomers in a concentration, if present, ≤1 wt.-% related to the sum of the weights of the components a), b) and c).

In embodiments, the concentration of the addition polymer from unsaturated carboxylic monomers is ≤ 1 wt.% relative to the sum of the weights of the components a), b) and c) of the resin, and preferably ≤ 0.5 wt.%, and more preferably ≤ 0.1 wt.%.

In still more preferred embodiments, the inventive resins are substantially free of addition polymer from unsaturated carboxylic monomers. In other words, the optional addition polymer is preferably absent.

Through this specification, by substantially free it is meant that the concentration of the compound in the resin is sufficiently low as to be negligible. In this context, it should be understood however that the compound might be present as traces, e.g. from cross-contamination, preferably at a concentration of ≤ 0.01 wt.-% related to the weight of the resin components.

The resin of additional embodiments is preferably substantially free of any polycarboxylic acid with a weight average molecular weight > 400 g/mol. It would be recognized that the weight average molecular weight of a non-polymeric compound equals its molecular weight.

In preferred embodiments, the polyol component c) of the resin is selected from the group of **alkylene** glycol, sugar alcohol, and mixtures thereof.

The polyol component c) of the resin might be an alkylene glycol. More preferably in this case, the **alkylene** glycol is selected from ethylene glycol, propylene glycol, and mixtures thereof. Even more preferably, the **alkylene** glycol is ethylene glycol.

In additional preferred embodiments, the polyol component c) of the resin is a sugar alcohol. More preferably in this case, the hydrogenated sugar is selected from glycerol, sorbitol, maltitol and mixtures thereof. Even more preferably, the hydrogenated sugar is glycerol or sorbitol.

In embodiments of the invention, the non-polymeric polycarboxylic compound b) of the resin has a molecular weight ≤ 400 g/mol. The non-polymeric polycarboxylic compound is preferably selected from the group of citric acid, succinic acid, tartaric acid, their corresponding anhydrides, the salts thereof, and mixtures thereof. More preferably, the non-polymeric polycarboxylic acid compound b) is selected from the group of citric acid, citrate salts (e.g. metal or ammonium citrate salts), and mixtures thereof.

The amount of native starch a), in embodiments, might range from 30-85 wt.-%, preferably from 45-75 wt.-% and more preferably from 40-60 wt.-%, related to the sum of the weights of the a), b) and c) components of the resin.

In any of the embodiments, the amount of non-polymeric polycarboxylic compound b) might range from 14-60 wt.-%, preferably from 20-50 wt.-% and more preferably from 30-50 wt.-%, related to the sum of the weights of the a), b) and c) components of the resin.

In any of the embodiments, the amount of polyol c) might range from 1-30 wt.-%, preferably from 3-25 wt.-% and more preferably from 5-20 wt.-%, related to the sum of the weights of the a), b) and c) components of the resin.

In embodiments, the inventive resin might additionally comprise an esterification catalyst.

In preferred embodiments of the invention, the amount of native starch ranges from 30 - 85 wt.-%, the amount of non-polymeric polycarboxylic compound ranges from 14 - 60 wt.-%, and the amount of polyol ranges from 1 - 30 wt.-%, all amounts related to the sum of the weights of the three components. Also preferably, the amount of native starch in the resin ranges from 45-75 wt.-%, the amount of non-polymeric polycarboxylic compound ranges from 20-50 wt.-%, and the amount of polyol ranges from 3-25 wt.-%, in relation to the sum of the weights of the three components. More preferably, the amount of native starch in the resin ranges from 40-60 wt.-%, the amount of non-polymeric polycarboxylic compound ranges from 30-50 wt.-%, and the amount of polyol ranges from 5-20 wt.-%, in relation to the sum of the weights of the three components.

Through this description and in the claims, the weight percentages given for the three components, native starch, non-polymeric polycarboxylic compound and polyol, are indicated for the compounds as such, in their pure form, excluding any impurities, water or solvents which they might contain, e.g. in their commercially available forms.

The invention also concerns resins according to any of the embodiments, wherein the native starch has a soluble part in water at 20°C lower than 0.15 g per 100 g of water.

Another aspect of the present invention is to provide a method for the manufacture of the inventive resin.

In yet another inventive embodiment, it is provided an aqueous binder, preferably formaldehyde-free, for mineral wool comprising the curable resin of the embodiments of the invention. In embodiments, the binder is substantially free of addition polymers from unsaturated carboxylic monomers.

The invention is also directed to the mineral wool products manufactured using the inventive resin.

The invention thus also covers a mineral wool product which comprises mineral fibers and a cured binder, wherein the cured binder is obtained by curing at > 100°C a composition comprising a resin according to any of the previous embodiments.

Very useful binders for mineral wool can be obtained from the resins of the invention, which show suitable properties for the application in the manufacture of mineral wool, as well as sufficient dispersion stability. Furthermore, the resin dispersions can be conveniently diluted with large amounts of water to obtain the low solid content required for the application as a binder.

In comparison with previous resins and binders comprising dispersions of native starch and polymers from addition polymerization of unsaturated carboxylic monomers described in the art, the inventors surprisingly found that very useful resins and binders can be obtained by the embodiments described herein, which have reduced viscosity, and with improved mechanical bonding properties. Importantly, the combination of components a), b) and c) as claimed, provides resins and binders for use in the manufacture of mineral wool, which show significantly improved ageing resistance in humid conditions. This is thought to be the result of an efficient formation of thermoset during curing.

Free-formaldehyde resins and binders comprising polyol with molecular weight < 1000 g/mol, such as **alkylene** glycol or sugar alcohol, have been described previously, also in combination with native starch. However, in those cases, the polyol is used in combination with substantial amounts of addition polymers from unsaturated carboxylic monomers, as crosslink enhancers of the polymeric structures by means of esterification reaction. The present invention results in an unanticipated synergistic effect of the selected polyols with water-insoluble native starch, which turns into an unexpected improvement of the mechanical properties of humid-aged bonded products, and which allow reducing the amount of addition polymers from unsaturated carboxylic monomers to levels ≤ 1 wt.-%, and even makes their use unnecessary.

The inventive resins and binders can also be cured at sufficient speed at the curing temperatures usually employed in industrial curing ovens for mineral wool. An additional advantage of the resins and/or binders of the invention is that they do not significantly lose mass due to thermal degradation during the curing process, what is rendered in a higher efficiency of the binder. The very low concentration or absence of addition polymer from unsaturated carboxylic monomers is additionally translated into a higher content of bio-based renewable components in the resin (e.g. when the polymer is acrylic polymer obtained from crude oil). Another consequence of the low concentration or the absence of addition polymers from unsaturated carboxylic monomers, this being usually the most costly component, is that the resins of the invention can be made more economical.

The inventive binders have the additional advantage that they do not show stickiness to the different parts of the manufacturing line, before or after curing. Furthermore, the solid matter recovered as binder waste in the process-water during the manufacture of mineral wool can be recycled in its majority and added as part of new binder batches.

### Brief description of the drawings

*Figure 1* *is a graphical representation of the values of Young modulus obtained from glass beads specimens bonded with the resins of examples 1, 4-7, after humid ageing. Examples 4-7 are inventive examples, while example 1 is a non-inventive comparative example.*
*Figure 2* *is a graphical representation of the values of maximal load obtained from glass beads specimens bonded with the resins of examples 1, 5, 8-9, after humid ageing. Examples 5, 8-9 are inventive examples, while example 1 is a non-inventive comparative example.*
*Figure 3* *is a graphical representation of the values of Young modulus obtained from glass beads specimens bonded with the resins of examples 1-5, 10-13, after humid ageing. Examples 4-5 and 10-13 are inventive examples, while examples 1-3 are non-inventive comparative examples.*

### Detailed description of the embodiments of the invention

According to the present invention, the curable resin is in the form of a water dispersion, and comprises a) a water-insoluble native starch, b) a non-polymeric polycarboxylic compound of molecular weight ≤ 400 g/mol, and c) a polyol with a molecular weight < 1000 g/mol, preferably < 500 g/mol, and optionally additives. The resin optionally further comprises an addition polymer from unsaturated carboxylic monomers in a concentration, if present, ≤1 wt.-% related to the sum of the weights of the components a), b) and c). Preferably, the polyol c) is selected from alkylene glycol, sugar alcohol and mixtures thereof.

The resin of the invention is preferably formaldehyde-free. In the context of the invention, formaldehyde-free is used in the sense of indicating that essentially no formaldehyde is contained in or released from the resin. In other words, by essentially no formaldehyde is meant that the concentration of formaldehyde in the resin of this embodiment is < 0.1 wt.-% relative to sum of the weights of the a), b) and c) resin components, more preferably < 0.01 wt.-% and even more preferably zero.

The inventive resin is curable, meaning that it undergoes a setting reaction (hardening reaction) when heated over 100°C in a curing oven. Without wanting to be bounded by theory, it is believed that the resin of the invention cures by the crosslinking reaction between multiple carboxylic groups of the non-polymeric polycarboxylic compound, and multiple hydroxyl groups in the polysaccharide chains of the native starch and/or the polyol. However, other curing reactions and/or setting mechanisms like chemical/physical interactions (hydrogen bonding, physical entrapment, etc.) might also play a role in the curing of the resin in the curing oven.

As a consequence of the water-insolubility of the native starch component, the curable resin and binder of the invention are in the form of an aqueous dispersion. The term "aqueous dispersion" as used herein intends to describe a system with one continuous aqueous phase and a second particulate phase dispersed in the aqueous phase. The aqueous phase comprises water and might comprise further components soluble in water, such as salts, solvents, etc. It is preferred that the aqueous dispersion comprises at least 40 wt.-% of the aqueous phase.

Through this description, the term resin refers to the aqueous mixture of components which will form a crosslinked polymeric network after curing. The resin is usually stored before it is used, although it might as well be used just after it is prepared. The term binder refers to the aqueous mixture of components which is applied to the fibers in the manufacture of mineral wool products and subsequently cured to produce the bonding of the fibers at their cross-over points. The binder is commonly prepared on-site, meaning that the binder is prepared in the mineral wool production plant, usually continuously, a few minutes (1-5 minutes) before it is applied to the fibers. In most cases, the resin will be largely diluted with fresh water or process water and mixed with additives in the mineral wool manufacturing lines in order to prepare the binder. By additives it is meant the substances which are usually needed either to assist in the manufacture of mineral wool products, or to improve the properties of the manufactured products. The resin will then be comprised as a component in the binder. In exceptional cases, where no additives are used, the resin and the binder will be the same (except for the occasional dilution of the resin with water to prepare the binder).

Water-insoluble native starch is one component of the inventive resin. Native starch is the form of starch as it occurs in the nature, e.g. in the potato, maize, wheat and cassava plants from which it is obtained. Native starch has therefore not been physically, chemically or enzymatically modified, dextrinized or pre-gelatinized. As such, native starch is a long-chain polysaccharide composed of glucose repeating units joined by glycosidic bonds. Native starch is insoluble in cold water and ethanol, and it is present in the plants in form of semi-crystalline granules. In warm water, native starch becomes swollen, the granules burst, the semi-crystalline structure is lost, and the linear amylose chains partially leach out from the structure. Thus, there exists a temperature from where the native starch can be considered "solubilized". This temperature is usually known as gelatinization temperature, and is approx. 65°C. As soon as the irreversible gelatinization process starts, it is connected with a drastic permanent increase in the viscosity of the water mixture which is maintained even if the temperature is subsequently decreased.

Two different components are found to form native starches, which are distinguished by their molecular weight and their chain structure: 1) amylose: linear polysaccharide chains with weight-average molecular weight of approx. 10⁵-10⁶ g/mol; and 2) amylopectin: branched polysaccharide chains with weight-average molecular weight of approx. 10⁶-10⁸ g/mol.

Depending on the source of native starch, the ratio between amylose and amylopectin can vary significantly, fact that at the end strongly affects the physical and chemical properties of native starches. It is also known to use mixtures of native starches with different amylose:amylopectin content to obtain native starches with the desired properties. The native starch of the inventive resin preferably contains a ratio in weight of amylose:amylopectin between 70:30-15:85, preferably between 65:35-20:80, and even more preferably between 40:60-25:75. This ratio can be achieved by selecting the appropriate plant source of native starch, or by mixing native starches with different amylose:amylopectin contents.

Non-limiting examples of native starches useful for the binder of the present invention are Meritena® 120, Amyzet® 150, Meritena® 400 or Amyzet® 500 from Syral, Standard Maize Starch from Roquette or C*Gel® series from Cargill.

The water insoluble native starches useful for the invention are usually available as white powders, which might contain small amounts of non-carbohydrate components. They might also contain about 10-15 wt-% humidity. In the present description, the native starch weight % values refer to the dry native starch excluding the humidity content.

Preferred particle size of the native starch is from 10-60 µm.

The temperature of gelatinization of the native starches best suited for the invention ranges from 65-85°C.

The native starch used in the resin of the invention is insoluble in water. With this it is meant that the native starch has a soluble part in water at 20°C lower than 0.15 g per 100 g of water. The soluble part can be determined by preparing a dispersion of native starch in water at 20°C, filtering the mixture through a standard laboratory paper filter of approximately 8 µm mesh to get a clear solution, drying said clear solution at 135°C until a dry solid residue is obtained. The soluble part is determined as the grams of solid residue in 100 g of clear solution.

The resin of the invention comprises non-polymeric polycarboxylic compound of molecular weight ≤ 400 g/mol. The term non-polymeric polycarboxylic compound as used herein is understood to cover the polycarboxylic acids, any salts thereof and any precursor thereof, such as anhydrides, as well as the mixtures thereof. Different to the addition polymer from unsaturated carboxylic monomers optionally comprised in the resin, the non-polymeric polycarboxylic compounds are organic compounds formed by small molecules, with a molecular weight of ≤ 400 g/mol, and they are not polymeric, meaning that they are not formed by linking a number of repeating monomeric units together. The molecular weight of the non-polymeric polycarboxylic acid compound is indicated as free acid. By the term polycarboxylic it is meant herein that the compound carries more than one carboxylic moiety, at least two carboxylic moieties, more preferably at least three carboxylic moieties. Non-polymeric polycarboxylic acid precursors are understood here as compounds capable of forming non-polymeric polycarboxylic acid in the resin mixture, under the conditions present during the preparation and/or the use of the resin or the binder of the invention, either prior or during curing. These conditions include e.g. increased temperatures or pH variations. Unless specifically stated otherwise, through this description and in the claims, the weight percentages of non-polymeric acid salts or precursors are indicated for the corresponding acid form.

Exemplary non-polymeric polycarboxylic compounds are dicarboxylic, tricarboxylic and tetracarboxylic acids, and derivatives thereof. Thus, the non-polymeric polycarboxylic compound might be chosen from oxalic acid, malonic acid, succinic acid, glutaric acid, adipic acid, pimelic acid, suberic acid, azelaic acid, sebacic acid, malic acid, tartaric acid, tartronic acid, aspartic acid, glutamic acid, fumaric acid, itaconic acid, maleic acid, traumatic acid, camphoric acid, phthalic acid, tetrahydrophthalic acid, isophthalic acid, terephthalic acid, mesaconic acid, citraconic acid, citric acid, tricarballylic acid, 1,2,4-butane-tricarboxylic acid, aconitic acid, hemimellitic acid, trimellitic acid, trimesic acid, 1,2,3,4-butanetetracarboxylic acid, pyromellitic acid, and mixtures thereof. However, particularly preferred non-polymeric polycarboxylic compound is selected from the group of citric acid, succinic acid, tartaric acid, their corresponding anhydrides, the salts thereof, and mixtures thereof. In this regard, preferred non-polymeric polycarboxylic acid salts are sodium salts and/or ammonium salts.

More preferably, the non-polymeric polycarboxylic compound is selected from the group of citric acid and citrate salts (e.g. metal or ammonium citrate salts). The inventors found that citric acid is particularly advantageous, not only because of its large availability, low price and natural origin, but also because of the excellent compatibility with native starch, and the enhanced mechanical bonding properties and ageing resistance of the obtained resins.

In embodiments of the present invention, the resin comprises a polyol with a molecular weight < 1000 g/mol, preferably < 500 g/mol. The polyol is understood as an organic alcohol compound containing at least two hydroxyl groups. According to preferred embodiments of the invention, the polyol is selected from the group of **alkylene** glycol, sugar alcohol, and mixtures thereof.

In embodiments, the polyol comprises an **alkylene** glycol. In this description, **alkylene** glycols are organic diols with two hydroxy groups in two different carbon atoms. Preferably, the carbon atoms carrying the hydroxy groups are vicinal. They can also be described as alcohols derived from ethylene glycol. The term **alkylene** glycols, as used herein, also include diols obtained by condensation of ethylene glycol, in which the hydroxy groups are located in non-adjacent carbon atoms. Preferred **alkylene** glycols are ethylene glycol, propylene glycol, trimethylene glycol (1,3-propane diol), neopentyl glycol, diethylene glycol, triethylene glycol and polyethylene glycol. More preferably, the **alkylene** glycol is selected from ethylene glycol, propylene glycol and mixtures thereof. Even more preferably, the **alkylene** glycol is ethylene glycol.

In further embodiments, the polyol comprises a sugar alcohol. Sugar alcohol is understood to mean compounds obtained when the aldo or keto groups of a sugar are reduced (e.g. by hydrogenation) to the corresponding hydroxy groups. The starting sugar might be chosen from monosaccharides, oligosaccharides and polysaccharides, and mixtures of those products, such as syrups, molasses and starch hydrolyzates. Although sugar alcohols closely resemble the corresponding starting sugars, they are not sugars. Thus, for instance, sugar alcohols have no reducing ability, and cannot participate in the Maillard reaction typical of reducing sugars. Preferred sugar alcohols according to the invention are glycerol, erythritol, arabitol, xylitol, sorbitol, maltitol, mannitol, iditol, isomaltitol, lactitol, cellobitol, palatinitol, maltotritol, syrups thereof and the products from the hydrogenation of starch hydrolyzates with average weight molecular weight < 1000 g/mol. More preferably, the sugar alcohol is selected from glycerol, sorbitol, maltitol, and mixtures thereof. Even more preferably, the sugar alcohol is glycerol, sorbitol or mixtures thereof.

The resins of the invention optionally comprise an addition polymer from unsaturated carboxylic monomers. When present, the concentration of the addition polymer is ≤ 1 wt.-% related to the sum of the weights of the resin components a), b) and c) . Addition polymer in the context of the invention is considered a compound formed by linking together a number of repeating monomeric units by addition polymerization (or polyaddition). In the present case, the polymers optionally present are homo- and/or copolymers formed from addition polymerization of any number of unsaturated carboxylic monomers. Examples of unsaturated carboxylic monomers are well-known to the skilled artisan, and include mono-, di- and polybasic unsaturated carboxylic compounds, for instance acrylic acid, methacrylic acid, crotonic acid, isocrotonic acid, maleic acid, cinnamic acid, 2-methylmaleic acid, fumaric acid, itaconic acid, 2-methylitaconic acid, and derivatives thereof, as well as anhydrides, esters and salts thereof. Typical homo- and copolymers formed by addition polymerization of unsaturated carboxylic monomers are polyacrylic acid, polymethacrylic acids, polymaleic acid, polymaleic anhydride, esters and salts thereof.

Although less preferred, embodiments are also envisaged where the non-polymeric polycarboxylic compound of molecular weight ≤ 400 g/mol is reacted, for instance at elevated temperature, with the polyol previously to the combination with the water-insoluble native starch, forming a so-called pre-condensate. The pre-condensate is the result of multiple condensation (esterification) reactions between the carboxylic groups of the non-polymeric polycarboxylic compound, and the hydroxy groups of the polyol. Such pre-condensate comprises an intricate polymeric crosslinked structure with free carboxyl groups and hydroxy groups. The amounts of such free groups depend on the degree of the reaction between the non-polymeric polycarboxylic compound and the polyol.

Thus, in less preferred embodiments, the resin in the form of an aqueous dispersion comprises the components b) and c) in the form of a pre-condensate resulting from their condensation reaction, which has taken place prior to the combination with component a).

In preferred embodiments, the resin is substantially free of any polymeric polycarboxylic compound.

In further preferred embodiments, the resin is substantially free from any polycarboxylic compound with a molecular weight > 400 g/mol, either monomeric or polymeric.

In preferred embodiments, a catalyst is also added to the resin in order to enhance and/or to accelerate the curing of the resin. Typical examples of useful catalysts are phosphorous-containing esterification catalysts, like alkali metal hypophosphite salts, alkali metal phosphites, alkali metal polyphosphates, and the like. A preferred catalyst is sodium hypophosphite. The concentration of the catalyst in those embodiments is preferably greater than 0.1 wt.-% and less than 2 wt.-% relative to the sum of the weights of the components a), b) and c) of the resin.

The pH of the resin or the binder of the invention might be suitably adjusted with pH modifiers, including acids, such as sulfuric acid, phosphoric acid and/or hydrochloric acid, volatile bases (e.g. ammonia, amines) and non-volatile bases (e.g. NaOH). Depending on this pH value, the carboxylic groups contained in the non-polymeric polycarboxylic compound may be partially neutralized, forming the corresponding carboxylic salts (e.g. ammonium and sodium salts respectively for the exemplary bases above). It is preferred that the pH of the binder is acidic, preferably lower than 3, more preferably lower than 2, to obtain efficient curing. It is also possible to prepare the resin with a higher pH, in the range 3-8, by using a volatile base such as ammonia. During drying and curing of the resin, the volatile base is evaporated and the pH of the remaining binder composition on the fibers is decreased to the acidic pH more suitable for curing.

The method for preparing the resin of the invention in one embodiment comprises the steps of:
I) preparing a dispersion of water-insoluble native starch in water, and
II) contacting the dispersion obtained in step (I) with a water solution of the non-polymeric polycarboxylic compound of molecular weight ≤ 400 g/mol and the polyol with a molecular weight < 1000 g/mol, preferably selected from the group of **alkylene** glycol, sugar alcohol and mixtures thereof, and optionally comprising further additives.

Obviously, when the resin to be prepared is substantially free of addition polymer from unsaturated polycarboxylic polymers, the method for preparing the resin of the invention does not comprise any step wherein the resin is combined with such addition polymers.

In order to avoid premature reaction and/or gelatinization of the native starch, and to produce a resin according to the invention in the form of a low viscosity dispersion, it is preferred to carry out all the steps for the preparation of the resin and the binder at a temperature below 65°C, preferably below 50°C and most preferably in a range between 10°C and 40°C. According to a particularly preferred method for carrying out the invention, the temperature during preparation of the resin or the binder is not raised above room temperature. In other words, it is the aim of the present invention that the water-insoluble native starch contained in the resin is applied as such (un-modified) to the mineral fibers as part of the binder dispersion composition. With this it is intended that the binder has sufficient low viscosity and spreadability to be able to migrate to the cross-over points between the fibers of the mineral wool mat, before it is cured. It has to be understood that the temperature is raised above 100°C in the curing oven, after the binder has been prepared and applied to the mineral fibers.

Preferably, the step I) is done with mechanical stirring until a homogenous dispersion is obtained.

The contacting step II) is preferably done under mechanical stirring as well. It is preferred to carry out this step II) in less than 60 minutes, and more preferably between 20 and 30 minutes.

The method for preparing the resin can be varied and is not limited to the embodiments described herein. For instance, the method may as well comprise the step of dispersing the solid native starch directly in the aqueous solution of the non-polymeric polycarboxylic compound and the polyol, optionally also comprising further additives. In another variation of the method of the invention, the polyol or the optional additives might be comprised in the native starch dispersion (or in both native starch dispersion and non-polymeric polycarboxylic compound) before the non-polymeric polycarboxylic compound is contacted with the native starch dispersion. In all cases, the contacting steps between the native starch and the other resin components is preferably carried out in less than 60 minutes, and more preferably between 20 and 30 minutes.

The amounts of non-polymeric polycarboxylic compound with molecular weight ≤ 400 g/mol and of native starch might be varied independently of each other, and independently of the amount of polyol, as long as the sum of the weights of the three components native starch, non-polymeric polycarboxylic compound and polyol adds 100 wt.-%.

Thus, the amount of non-polymeric polycarboxylic compound might range from 14-60 wt.-%, preferably from 20-50 wt.-% and more preferably from 30-50 wt.-%, related to the sum of the weights of native starch, non-polymeric polycarboxylic compound and polyol components.

The amount of polyol might range from 1-30 wt.-%, preferably from 3-25 wt.-% and more preferably from 5-20 wt.-%, related to the sum of the weights of native starch, non-polymeric polycarboxylic **compound and polyol components.**

The amount of native starch might range from 30-85 wt.-%, preferably from 45-75 wt.-% and more preferably from 40-60 wt.-%, related to the sum of the weights of native starch, non-polymeric polycarboxylic compound and polyol components.

Preferably, the amount of native starch ranges from 30-85 wt.-%, the amount of non-polymeric polycarboxylic compound ranges from 14-60 wt.-%, and the amount of polyol ranges from 1 - 30 wt.%, in relation to the sum of the weights of three components. This means, that the sum of the three concentration wt.-% values selected from the ranges above adds 100 wt.-%. Also preferably the amount of native starch in the resin ranges from 45-75 wt.-%, the amount of non-polymeric polycarboxylic compound ranges from 20-50 wt.-%, and the amount of polyol ranges from 3-25 wt.-%, in relation to the sum of the weights of the three components. More preferably the amount of native starch in the resin ranges from 40-60 wt.-%, the amount of non-polymeric polycarboxylic compound ranges from 30-50 wt.-%, and the amount of polyol ranges from 5-20 wt.-%, in relation to the sum of the weights of the three components.

In the case where citric acid and/or a precursor thereof is the non-polymeric polycarboxylic compound and the polyol is glycerol, it has been found particularly advantageous when the amount of native starch ranges from 40-60 wt.-%, the amount of citric acid and/or precursor thereof ranges from 20-50 wt.-%, and the amount of glycerol ranges from 3-25 wt.%, in relation to the sum of the weights of three components.

When the inventive resin is used in a binder for the manufacture of mineral wool, the binder might be prepared by taking the resin, optionally mixing it with additives and adjusting the solid content with water to a preferred 4 to 20 wt.-% range. Nevertheless, the solid content of the aqueous resin dispersion and binder of the invention is not particularly limited, and depends on the intended application. In this context, solid content is defined as the amount of residue remaining after drying the aqueous composition at 135°C for 1 hour in a ventilated oven.

In a preferred embodiment, in addition to the resin dispersion, other additives described in the art might be incorporated for the preparation of the inventive binder composition. Those additives are intended either to assist in the manufacture of mineral wool products, or to improve the properties of the manufactured products. Non-limiting examples of such additives are hydrophobizing agents such as silicones and fluorocarbon-polymers, de-dusting agents such as paraffin and mineral oils, adhesion promoters such as alkoxysilanes, fiber softeners, preservatives, dyes and/or corrosion inhibitors, among others. The amount of these optional additives in the inventive binder does not exceed 20 wt.-% and preferably does not exceed 10 wt.-% of the total non-aqueous content of the binder. In a suitable embodiment, the inventive binder composition might also comprise at least one filler or resin extender, such as urea, sugars, molasses, lignosulfonates or tannins. Resin extenders are compounds added to binder compositions to "extend" the resin, thereby reducing the resin usage and reducing the total binder cost, and which, up to a certain concentration, do not deteriorate unacceptably the final properties of the cured binder. The amount of optional filler and/or resin extender in the inventive binder does not exceed 30 wt.-% and preferably does not exceed 20 wt.-% of the total non-aqueous content of the binder. The time from the moment the binder additives are contacted with the resin until the binder is applied to the mineral fibers usually ranges from 1 to 5 minutes. It is also possible, according to an embodiment, that these additives, provided they do not compromise the stability, might as well be incorporated already in the resin dispersion, before the binder is prepared. It is also preferred that the total amount of optional additives plus filler or resin extender in the inventive binder is no more than 30 wt.-% of the total non-aqueous content of the binder, and even more preferably no more than 20 wt.-%.

As mentioned above, it is an aim of the present invention that the water-insoluble native starch is not modified before the binder is applied to the mineral fibers. This means that the native starch is not hydrolyzed, gelatinized or dextrinized at least until the binder has been applied onto the mineral fibers.

In embodiments, the binder of the invention might be then applied by spraying to the individual mineral fibers after fiberization, e.g. by a centrifugal spinner, while the fibers still retain some residual heat. The impregnated fibers are then collected on a foraminous conveyor in a forming chamber, where a primary un-cured mat is formed. A significant part of the water comprised in the binder is evaporated at this stage. Due to the specific composition of the resins of the invention, the viscosity of the inventive resin and binder is particularly low. This allows first that the binder can more homogenously be distributed on the fibers, and second, that it can more efficiently flow to the intersections of the fibers in the mat before it is cured. This produces mineral wool products with better properties.

The binder is preferably applied in an amount to produce a solid binder content in the final product after drying and curing between 3-12 wt.-%, relative to the weight of the mineral wool product. This amount of cured binder is measured as LOI (loss on ignition) according to ISO 29771:2008.

After the fibers have been impregnated and the primary mat is formed, the inventive binder is cured at temperatures above 100°C, preferably at a temperature between 140-180°C. The curing time preferably ranges from 3-5 min. The cured mineral wool mat is afterwards trimmed and shaped into its final dimensions, optionally rolled up, and packaged. Additional facing layers like paper, aluminum, glass fiber veil or mixtures thereof might also be applied to the mineral wool depending on its intended application.

When the inventive binders are employed in the manufacture of mineral wool products, it has been observed that they can advantageously be cured faster and at reduced temperatures in comparison to other binders based on carbohydrates different than native starch, and that their mass loss by thermal degradation during curing is also lower, while maintaining a whitish-tan color.

Even more importantly, the mineral wool products bonded with the binders of the invention show improved mechanical properties, particularly after ageing in humid conditions, over those bonded with native starch binder systems having different amounts of polymers from unsaturated carboxylic monomers. The inventive resins allow avoiding the use of such polymers, while simultaneously improving the mechanical performance of the bonding obtained by the cured binder. The mechanical performance of the inventive resins and binders is also improved when compared with the performance of similar resins, which lack of the presence of the polyol.

In embodiments of the invention, the curable resin in the form of an aqueous dispersion consists of the components a), b) and c) without any additional component, wherein a) is water-insoluble native starch, b) is a non-polymeric polycarboxylic compound of molecular weight ≤ 400 g/mol, and c) is a polyol with a molecular weight < 1000 g/mol, preferably < 500 g/mol, the polyol c) being preferably selected from the group of **alkylene** glycol, sugar alcohol, and mixtures thereof.

The invention therefore also relates to an improved mineral wool product which comprises mineral fibers and a cured binder according to the different inventive embodiments described herein. The mineral wool, thus, in embodiments of the invention, comprises mineral fibers and a cured binder, the cured binder obtained by curing at > 100°C a composition comprising any of the previous resin embodiments, in particular a composition comprising a) water-insoluble native starch, b) non-polymeric polycarboxylic compound of molecular weight ≤ 400 g/mol, and c) a polyol with a molecular weight < 1000 g/mol, preferably < 500 g/mol, the polyol preferably selected from the group of **alkylene** glycol, sugar alcohol, and mixtures thereof, as well as other optional components and additives as described above, and wherein the composition optionally comprises an addition polymer from unsaturated carboxylic monomers in a concentration, if present, ≤1 wt.-% related to the sum of the weights of the components a), b) and c). More preferably, the amount of native starch in the composition ranges from 30 - 85 wt.-%, the amount of non-polymeric polycarboxylic compound ranges from 14 50 wt.-%, and the amount of polyol ranges from 1 - 30 wt.-%, all amounts related to the sum of the weights of the components a), b) and c).

The inventive mineral wool products can be used for instance in the thermal and acoustic insulation of buildings, conducts, transportations or appliances, or for fire protection, as well as for other non-insulation applications.

### Examples:

Different inventive and comparative examples of resins are described in this section and contained in Table 1. These examples are included to help to describe the invention, but they are not intended to be limiting.

In Table 1, the amounts of native starch, non-polymeric carboxylic compound and polyol are given as wt.-% in relation to the sum of the weights of the three resin components. The maximum load values (mechanical bonding strength) and the Young Modulus values before and after humid ageing are measured according to the method described below. The loss on ignition (LOI) according to the conditions in ISO 29771:2008 in the prepared specimens, a measure of the resin content, is in the range 3-4 wt.-%.

The mechanical bonding properties achieved with the cured resin are determined by measuring the maximal load and the maximum (initial) slope (Young Modulus) from stress-strain curves measured from glass bead specimens bonded with the cured resins. In this method, 100 g of glass beads with an average diameter of 200-300 micrometers from the supplier "Abrasivos y Maquinaria S.A." are thoroughly mixed with 20 g of resin dispersion having 25 wt.-% solid content. Afterwards, the mixture is poured into stainless steel molds to produce specimens with the dimensions 81 mm x 22 mm x 7 mm. The specimens in the molds are dried and cured at 200°C for 25 minutes in a ventilated oven. The stress-strain curves are obtained by subjecting the specimens to stretching with a tensiometer at a constant pulling rate of 5 mm/min while registering the pulling force applied to the specimen. The maximal load and the maximum slope after humid ageing are obtained by the same method but after the specimens have been subjected to the humid ambient created in a closed desiccator of 20 L total volume containing 100 mL water inside, and heated in the oven at 90°C during 90 min. The specimen is placed over the water in the desiccator, so that there is no contact with the liquid water.

The raw materials used in the examples are:
- Native starch: Maritena 120 supplied by Syral
- Non-polymeric polycarboxylic compound: Succinic acid Biosuccinium® supplied by Helm Iberica; citric acid and tartaric acid supplied by Sigma Aldrich.
- Polyol: Glycerol supplied by Sigma-Aldrich; ethylene glycol supplied by Sigma-Aldrich; sorbitol Meritol 121 supplied by Syral.

The amounts of each component and the amount of water will depend on the total amount of resin to be prepared and on the concentration of the selected raw materials. Nevertheless, these amounts can be easily calculated by the skilled person from the percentages in Tables 1 to obtain resin dispersions with 45 wt.-% final solid content.

The resins are prepared at room temperature following this general procedure:
1) One container equipped with a mechanical stirrer is charged with the calculated amounts of water, non-polymeric polycarboxylic compound (citric acid, succinic acid, tartaric acid) and polyol (glycerol, ethylene glycol, sorbitol), and the mixture is stirred vigorously for 10 minutes until a homogeneous and transparent solution is obtained.
2) Then, the corresponding quantity of native starch is slowly added to the solution resulting from step 1). After all the native starch has been added, the stirring is kept for another 20 minutes in order to assure good dispersion.

The resins obtained by this process are in form of milky, low viscosity water dispersions.

Examples 4-14 are embodiments of the inventive resins, whereas examples 1-3 are non-inventive comparative examples. They all have in common, that the amount of native starch ranges between 51 - 60 wt.-% relative to the sum of the weights of the resin components. Each maximum load and modulus value in Table 1 is an average calculated from 6 specimens.

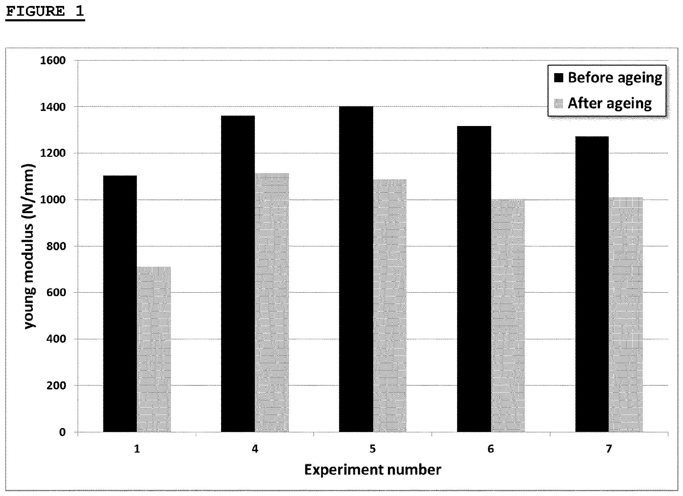

Figure 1 depicts a graphical comparison of the Young modulus vales for examples 1, 4-7, before and after ageing. These series of experiments correspond to resins having citric acid as non-polymeric polycarboxylic compound, and glycerol as polyol. As can be appreciated from this comparison, the Young modulus after ageing of specimens bonded with the inventive resins is significantly increased over values for the comparative example 1.

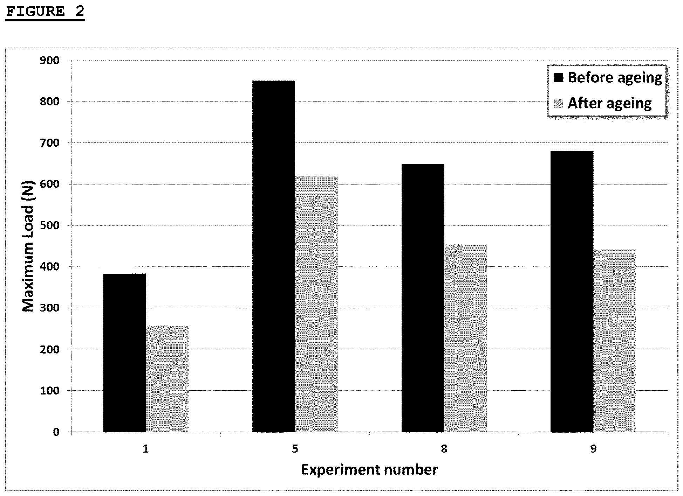

Figure 2 depicts a graphical comparison of the maximal load obtained before and after humid ageing, measured as described above, from resins of examples 1, 5, 8 and 9. This series compares experiments with similar ratios of components, wherein the polyol is varied. It can be seen how the maximum load of the bond is increased significantly for the resins of the invention, when compared with the values obtained for the non-inventive resin of example 1.

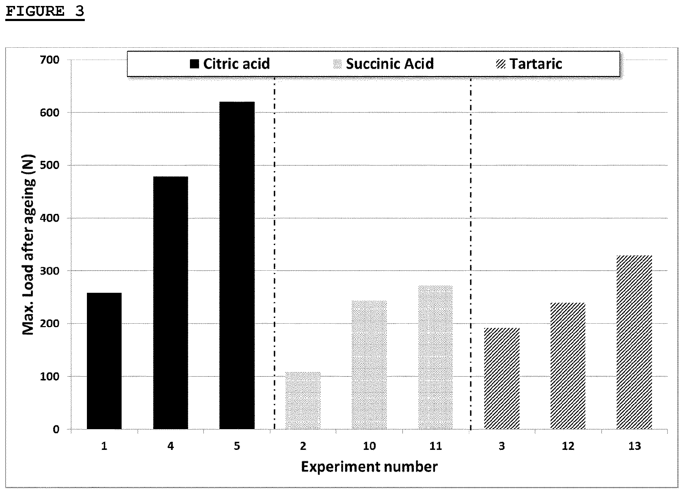

Figure 3 depicts a graphical comparison of the maximal load after humid ageing, measured as described above, for resins of examples 1-5 and 10-13. Examples 1-3 are non-inventive comparative examples. It can be seen how the examples with the resins from entries 4-5 and 10-13, particularly when the acid is citric acid, show a significant improvement of the mechanical properties of the bond after humid ageing. The final bonding strength depends on the non-polymer polycarboxylic compound used.

**TABLE 1:**

| Example | Native starch (wt.-%) | Non-polymeric polycarboxylic compound (wt.-%) | Polyol (wt.-%) | Maximum load (N) | Young Modulus (N/mm) | Maximum load aged (N) | Young Modulus aged (N/mm) |
|---|---|---|---|---|---|---|---|
| 1^{*} | 60.0 | 40.0 Citric acid | - | 384 | 1103 | 258 | 713 |
| 2^{*} | 60.0 | 40.0 Succinic acid | - | 205 | 606 | 108 | 367 |
| 3^{*} | 60.0 | 40.0 Tartaric acid | - | 360 | 1168 | 191 | 761 |
| 4 | 57.0 | 38.0 Citric acid | 5.0 Glycerol | 679 | 1361 | 479 | 1114 |
| 5 | 55.0 | 37.0 Citric acid | 8.0 Glycerol | 851 | 1402 | 620 | 1086 |
| 6 | 53.0 | 35.0 Citric acid | 12.0 Glycerol | 777 | 1318 | 495 | 1003 |
| 7 | 51.0 | 34.0 Citric acid | 15.0 Glycerol | 593 | 1272 | 482 | 1010 |
| 8 | 55.0 | 37.0 Citric acid | 8.0 Ethylene glycol | 649 | 1281 | 456 | 1132 |
| 9 | 55.0 | 37.0 Citric acid | 8.0 Sorbitol | 680 | 1346 | 442 | 1102 |
| 10 | 57.0 | 38.0 Succinic acid | 5.0 Glycerol | 411 | 895 | 243 | 669 |
| 11 | 55.0 | 37.0 Succinic acid | 8.0 Glycerol | 506 | 914 | 272 | 724 |
| 12 | 57.0 | 38.0 Tartaric acid | 5.0 Glycerol | 354 | 1010 | 240 | 756 |
| 13 | 55.0 | 37.0 Tartaric acid | 8.0 Glycerol | 335 | 1108 | 329 | 888 |
| 14^{†} | 57.0 | 38.0 Citric acid | 5.0 Glycerol | 648 | 1385 | 503 | 1059 |

| | | | | | | | |
|---|---|---|---|---|---|---|---|
| * Comparative examples ^{†} Resin includes additionally 0.5 wt.-% polyacrylic polymer (Aquaset BI 700 from Dow Chemicals) related to the sum of the weights of native starch, citric acid and glycerol. | | | | | | | |

## Claims

1. A curable resin, preferably formaldehyde-free, in the form of an aqueous dispersion, comprising components a), b) and c), wherein:
a) is water-insoluble native starch,
b) is non-polymeric polycarboxylic compound of molecular weight ≤ 400 g/mol, and
c) is a polyol with a molecular weight < 1000 g/mol, preferably < 500 g/mol, and
optionally further comprising an addition polymer from unsaturated carboxylic monomers in a concentration, if present, ≤ 1 wt.-% related to the sum of the weights of the components a), b) and c).

2. The resin of any of the previous claims, wherein the resin is substantially free of polymers from unsaturated carboxylic monomers.

3. The resin of any of the previous claims, wherein the polyol c) is selected from the group of **alkylene** glycol, sugar alcohol, and mixtures thereof.

4. The resin of any of the previous claims, wherein the polyol c) is an **alkylene** glycol selected from ethylene glycol, propylene glycol, and mixtures thereof.

5. The resin of any of the previous claims 1-3, wherein the polyol c) is a sugar alcohol selected from glycerol, sorbitol, maltitol, and mixtures thereof.

6. The resin of any of the previous claims, wherein the non-polymeric polycarboxylic acid compound b) is selected from the group of citric acid, succinic acid, tartaric acid, their corresponding anhydrides, the salts thereof, and mixtures thereof.

7. The resin of any of the previous claims, wherein the amount of native starch a) ranges from 30-85 wt.-%, preferably from 45-75 wt.-% and more preferably from 40-60 wt.-%, related to the sum of the weights of the components a), b) and c).

8. The resin of any of the previous claims, wherein the amount of native starch **a) ranges** from 30 - 85 wt.-%, the non-polymeric polycarboxylic acid compound b) ranges from 14 - 60 wt.-%, and the amount of polyol c) ranges from 1 - 30 wt.-%, all amounts related to the sum of the weights of the components a), b) and c) .

9. The resin of any of the previous claims, wherein the components b) and c) are comprised in the resin in the form of a pre-condensate, resulting from their condensation reaction.

10. The resin of any of the claims 1-8, wherein the resin is substantially free of polycarboxylic acid with a weight average molecular weight > 400 g/mol.

11. The resin of any of the previous claims, additionally comprising an esterification catalyst.

12. A method for the manufacture of the resin of any of the previous claims, comprising preparing an aqueous dispersion of a) water-insoluble native starch and contacting the water-insoluble native starch in any order with a b) non-polymeric polycarboxylic acid compound of molecular weight < 400 g/mol and c) a polyol with a molecular weight < 1000 g/mol, preferably < 500 g/mol.

13. A aqueous binder, preferably formaldehyde-free, for mineral wool comprising the curable resin of any of the previous claims 1-11, optionally comprising additives, fillers and/or resin extenders, and with a solid content of 4 to 20 wt.-%.

14. A mineral wool product comprising mineral fibers and cured binder, wherein the cured binder is obtained by curing at > 100°C a binder according to claim 13.

## Patentansprüche

1. Härtbares Harz, vorzugsweise formaldehydfrei, das in Form einer wässrigen Dispersion vorliegt, aufweisend die Bestandteile a), b) und c), wobei
a) eine wasserunlösliche native Stärke ist,
b) eine nicht-polymere Polycarbonsäureverbindung mit einem Molekulargewicht von ≤ 400 g/mol ist, und
c) ein Polyol mit einem Molekulargewicht von < 1000 g/mol, vorzugsweise < 500 g/mol ist, und
wobei es optional weiterhin ein Additionspolymer aus ungesättigten Carboxylmonomeren in einer Konzentration, sofern vorhanden, von ≤ 1 Gew.-% aufweist, bezogen auf die Gewichtssumme der Bestandteile a), b) und c).

2. Harz nach einem beliebigen der vorhergehenden Ansprüche, wobei das Harz im Wesentlichen frei von Polymeren aus ungesättigten Carboxylmonomeren ist.

3. Harz nach einem beliebigen der vorhergehenden Ansprüche, wobei das Polyol c) aus der Gruppe von Alkylenglykol, Zuckeralkohol und deren Mischungen ausgewählt ist.

4. Harz nach einem beliebigen der vorhergehenden Ansprüche, wobei es sich bei dem Polyol c) um ein Alkylenglykol handelt, das aus Ethylenglykol, Propylenglykol und deren Mischungen ausgewählt ist.

5. Harz nach einem beliebigen der vorhergehenden Ansprüche 1 bis 3, wobei es sich bei dem Polyol c) um einen Zuckeralkohol handelt, der aus Glycerin, Sorbit, Maltit und deren Mischungen ausgewählt ist.

6. Harz nach einem beliebigen der vorhergehenden Ansprüche, wobei die nicht-polymere Polycarbonsäureverbindung b) aus der Gruppe von Citronensäure, Bernsteinsäure, Weinsäure, deren jeweiligen Anhydriden, deren Salzen sowie Mischungen davon ausgewählt ist.

7. Harz nach einem beliebigen der vorhergehenden Ansprüche, wobei die Menge an nativer Stärke a) im Bereich von 30 bis 85 Gew.-%, vorzugsweise von 45 bis 75 Gew.-% und insbesondere von 40 bis 60 Gew.-% liegt, bezogen auf die Gewichtssumme der Bestandteile a), b) und c).

8. Harz nach einem beliebigen der vorhergehenden Ansprüche, wobei die Menge an nativer Stärke a) im Bereich von 30 bis 85 Gew.-%, an nicht-polymerer Polycarbonsäureverbindung b) im Bereich von 14 bis 60 Gew.-%, und die Menge an Polyol c) im Bereich von 1 bis 30 Gew.-% liegt, wobei sämtliche Mengen sich auf die Gewichtssumme der Bestandteile a), b) und c) beziehen.

9. Harz nach einem beliebigen der vorhergehenden Ansprüche, wobei die Bestandteile b) und c) in dem Harz in Form eines Vorkondensats vorliegen, welches durch eine Kondensationsreaktion derselben erhalten wird.

10. Harz nach einem beliebigen der Ansprüche 1 bis 8, wobei das Harz im Wesentlichen frei an Polycarbonsäure mit einem Gewichtsmittel des Molekulargewichts von > 400 g/mol ist.

11. Harz nach einem beliebigen der vorhergehenden Ansprüche, wobei es darüber hinaus einen Veresterungskatalysator aufweist.

12. Verfahren zur Herstellung des Harzes nach einem beliebigen der vorhergehenden Ansprüche, aufweisend das Bereiten einer wässrigen Dispersion von a) wasserunlöslicher nativer Stärke und das In-Kontakt-Bringen der wasserunlöslichen nativen Stärke, in einer beliebigen Reihenfolge, mit b) einer nicht-polymeren Polycarbonsäureverbindung mit einem Molekulargewicht von < 400 g/mol und c) einem Polyol mit einem Molekulargewicht < 1000 g/mol, vorzugsweise von < 500 g/mol.

13. Wässriges, vorzugsweise formaldehydfreies Bindemittel für Mineralwolle, aufweisend das härtbare Harz nach einem beliebigen der vorhergehenden Ansprüche 1 bis 11, optional aufweisend Zusatzstoffe, Füllstoffe und/oder Harzstreckmittel, und mit einem Feststoffgehalt von 4 bis 20 Gew.-%.

14. Mineralwolleprodukt, das Mineralfasern und gehärtetes Bindemittel aufweist, wobei das gehärtete Bindemittel erhalten wird, indem ein Bindemittel nach Anspruch 13 bei > 100 °C gehärtet wird.

## Revendications

1. Résine durcissable, de préférence exempte de formaldéhyde, sous la forme d'une dispersion aqueuse, comprenant les composants a), b) et c), dans laquelle :
a) est un amidon natif insoluble dans l'eau,
b) est un composé polycarboxylique non polymère de poids moléculaire ≤ 400 g/mol, et
c) est un polyol ayant un poids moléculaire < 1000 g/mol, de préférence < 500 g/mol, et
comprenant en outre facultativement un polymère d'addition provenant de monomères carboxyliques insaturés à une concentration, s'il est présent, ≤ 1 % en poids, par rapport à la somme des poids des composants a), b) et c).

2. Résine selon l'une quelconque des revendications précédentes, dans laquelle la résine est essentiellement exempte de polymères provenant de monomères carboxyliques insaturés.

3. Résine selon l'une quelconque des revendications précédentes, dans laquelle le polyol c) est choisi dans le groupe des alkylène glycols, des alditols et des mélanges de ceux-ci.

4. Résine selon l'une quelconque des revendications précédentes, dans laquelle le polyol c) est un alkylène glycol choisi parmi l'éthylène glycol, le propylène glycol et les mélanges de ceux-ci.

5. Résine selon l'une quelconque des revendications 1 à 3, dans laquelle le polyol c) est un alditol choisi parmi le glycérol, le sorbitol, le maltitol, et les mélanges de ceux-ci.

6. Résine selon l'une quelconque des revendications précédentes, dans laquelle le composé acide polycarboxylique non polymère b) est choisi dans le groupe constitué par l'acide citrique, l'acide succinique, l'acide tartrique, leurs anhydrides correspondants, les sels de ceux-ci, et les mélanges de ceux-ci.

7. Résine selon l'une quelconque des revendications précédentes, dans laquelle la quantité d'amidon natif a) est comprise dans la plage allant de 30 à 85 % en poids, de préférence de 45 à 75 % en poids, et plus préférablement de 40 à 60 % en poids, par rapport à la somme des poids des composants a), b) et c).

8. Résine selon l'une quelconque des revendications précédentes, dans laquelle la quantité d'amidon natif a) est comprise dans la plage allant de 30 à 85 % en poids, le composé acide polycarboxylique non polymère b) est compris dans la plage allant de 14 à 60 % en poids, et la quantité de polyol c) est comprise dans la plage allant de 1 à 30 % en poids, toutes les quantités étant par rapport à la somme des poids des composants a), b) et c).

9. Résine selon l'une quelconque des revendications précédentes, dans laquelle les composants b) et c) sont compris dans la résine sous la forme d'un pré-condensat, résultant de leur réaction de condensation.

10. Résine selon l'une quelconque des revendications 1 à 8, dans laquelle la résine est sensiblement exempte d'acide polycarboxylique ayant un poids moléculaire moyen en poids > 400 g/mol.

11. Résine selon l'une quelconque des revendications précédentes, comprenant en outre un catalyseur d'estérification.

12. Procédé pour la fabrication de la résine selon l'une quelconque des revendications précédentes, comprenant la préparation d'une dispersion aqueuse de a) un amidon natif insoluble dans l'eau et la mise en contact de l'amidon natif insoluble dans l'eau avec, dans n'importe quel ordre, b) un composé acide polycarboxylique non polymère de poids moléculaire < 400 g/mol et c) un polyol de poids moléculaire < 1000 g/mol, de préférence < 500 g/mol.

13. Liant aqueux, de préférence exempt de formaldéhyde, pour une laine minérale, comprenant la résine durcissable selon l'une quelconque des revendications 1 à 11, comprenant facultativement des additifs, des charges et/ou des diluants de résine, et avec une teneur en matières solides de 4 à 20 % en poids.

14. Produit de laine minérale comprenant des fibres minérales et un liant durci, dans lequel le liant durci est obtenu par durcissement à > 100 °C d'un liant selon la revendication 13.
